Europäisches Patentamt

European Patent Office

Office européen des brevets

(19)

(11) Veröffentlichungsnummer : **0 156 953**
**B1**

(12) **EUROPÄISCHE PATENTSCHRIFT**

(45) Veröffentlichungstag der Patentschrift :
09.09.87

(51) Int. Cl.⁴ : **B 65 G   1/04**, G 06 F 15/24,
    B 25 J   9/00

(21) Anmeldenummer : **84112412.6**

(22) Anmeldetag : **15.10.84**

(54) Verfahren zum Kommissionieren von Gütern.

(30) Priorität : **05.03.84 DE 3408081**

(43) Veröffentlichungstag der Anmeldung :
**09.10.85 Patentblatt 85/41**

(45) Bekanntmachung des Hinweises auf die Patenterteilung : **09.09.87 Patentblatt 87/37**

(84) Benannte Vertragsstaaten :
**AT CH DE FR GB IT LI NL SE**

(56) Entgegenhaltungen :
**EP-A- 0 076 182**
**EP-A- 0 091 058**

(73) Patentinhaber : **Siemens Aktiengesellschaft Berlin und München**
**Wittelsbacherplatz 2**
**D-8000 München 2 (DE)**

(72) Erfinder : **Merz, Arthur**
**Spessartstrasse 7**
**D-6430 Bad Hersfeld (DE)**

Jouve, 18, rue St-Denis, 75001 Paris, France

## Beschreibung

Die Erfindung bezieht sich auf ein Verfahren zum Kommissionieren von Gütern, bei dem

a) eine Verfahreinheit mit Roboter zum Greifen von Gütern und einem Codeleser vorhanden ist,

b) die Güter mit einer maschinell lesbaren Codierung versehen sind und

c) zur Steuerung der Verteilung Codeleser und Rechner dienen.

Mit diesem Oberbegriff des Anspruchs 1 wird auf ein Verfahren Bezug genommen, wie es beispielsweise im Dokument EP-A-76 182 beschrieben ist. Bei diesem bekannten Verfahren sind die Artikel mit einem maschinell lesbaren Etikett versehen, das mittels einer Videokamera abgefragt wird. Die Auswertung des Videobildes und die Steuerung der Verteilvorgänge wird zentral von einem Rechner aus vorgenommen. Es können jeweils nur ein oder mehrere Güter im gleichen Arbeitsgang zur gleichen Ablage gebracht werden.

Rechnergesteuerte Kommissioniereinrichtungen und Warenverteilanordnungen, gegebenenfalls in Verbindung mit lesbarer Codierung, sind ferner auch in der DE-PS 30 36 293 und der US-PS 43 36 589 beschrieben.

Es ist ferner bereits ein Paketverteilungssystem bekannt (Zeitschrift Electronic, August 1983, Seiten 95 bis 98), bei dem die mit Etiketten versehenen Pakete in das Lesefeld eines optischen Sensors gelangen. Der Sensor erkennt die Orientierung des Paketes, liest das Etikett und übergibt diese Daten an die Steuerung eines Roboters. Dieser greift das Paket und legt es in definierter Lage auf eine von drei Paletten ab. In dem vorgenannten Artikel wird im Zusammenhang mit anderen Anwendungsfällen auch davon gesprochen, daß der Roboter selbst den Informationsträger in den Bereich des Sensors bringen könnte.

Die Aufgabe der vorliegenden Erfindung besteht darin, ein Verfahren der eingangs genannten Art so auszugestalten, daß eine Vielzahl von angelieferten Gütern möglichst schnell auf verschiedene Regalfächer verteilt werden kann, und zwar ohne daß ein besonders hoher Aufwand an Identifizierungseinrichtungen erforderlich wird.

Diese Aufgabe wird erfindungsgemäß durch folgendes Verfahren gelöst :

d) auf der Verfahreinheit wird eine Aufnahmevorrichtung mit einer Vielzahl von Gütern angeordnet,

e) auf einen Steuerbefehl hin greift der Roboter jeweils eines der Güter aus der beladenen Aufnahmevorrichtung und schwenkt es mit seiner Codierung vor den Codeleser,

f) aus der gelesenen Codierung wird der Wegbefehl für die Verfahreinheit und den Roboter zum betreffenden Ablagefach abgeleitet,

g) simultan zur Ausführung des Wegebefehls wird die gelesene Codierung zum Rechner übertragen,

h) nach der Ausführung des Wegbefehls und nach Empfang der vom Rechner aufgrund der Plausibilisierung ermittelten Zieladresse legt der Roboter das abgegriffene Gut im betreffenden Fach ab,

i) dieser Steuerungsablauf ist jeweils solange wiederholbar, bis eine vorbestimmte Zahl von Gütern aus der Aufnahmevorrichtung entnommen ist, worauf die Verfahreinheit mit der Aufnahmevorrichtung zu einer Beladestation fährt.

Wesentlich ist bei dieser vogenannten Lösung, daß eine Vielzahl von zu verteilenden Gütern und das hierfür benötigte Identifizierungssystem gleichzeitig mit dem mechanischen Verteilorgan, dem Roboter, mit verfahren werden. Auf diese Weise benötigt man nur einen Codeleser und ist trotzdem sehr schnell hinsichtlich der Verteilung, da es nicht erforderlich ist, daß der Roboter für jeden Identifizierungsvorgang zu einer stationären Lesestation zurückkehren muß.

Um gegebenenfalls Störungen und den Beladezustand der Anlage erkennen zu können, ist es von Vorteil, wenn der Industrieroboter in an sich bekannter Weise mit Sensoren versehen wird, mit denen z. B. Aufnahmevorrichtung, Ablegefächer und abzulegende Güter kontrolliert werden können.

Wird als Aufnahmevorrichtung ein Behälter verwendet, so wird vorteilhafterweise an der Beladestation der jeweils geleerte Behälter gegen einen gefüllten Behälter ausgetauscht. Besonders einfach läßt sich der Greifvorgang für den Roboter gestalten, wenn bereits eine definierte Anordnung der zu greifenden Güter im Behälter sichergestellt ist, z. B. in der Form, daß als Güter Tüten verwendet werden, die in den kastenförmigen Behälter in definierten Abständen eingehängt sind. Diese Tüten ihrerseits können nun wiederum mit einer Vielzahl von einzelnen kleinen Teilen bestückt sein.

Anhand eines in der Zeichnung dargestellten Ausführungsbeispiels sei die Erfindung näher erläutert ; es zeigen :

Figur 1 ein Übersichtsbild des Kommissionierungssystems,

Figur 2 eine schematische Darstellung von Verfahreinheiten mit Roboter und Güterbehälter,

Figur 3 eines der zu verteilenden Güter in Form einer mit Codierung versehenen Tüte und

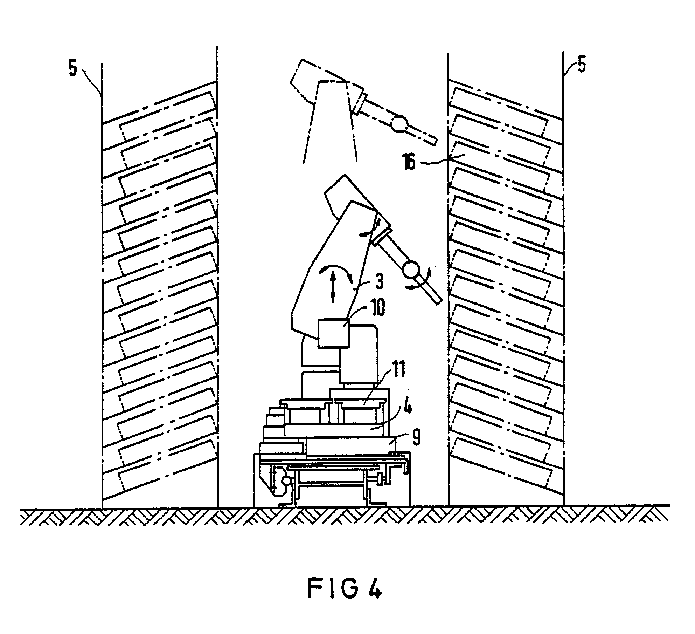

Figur 4 die Verfahreinheit in der Regalgasse.

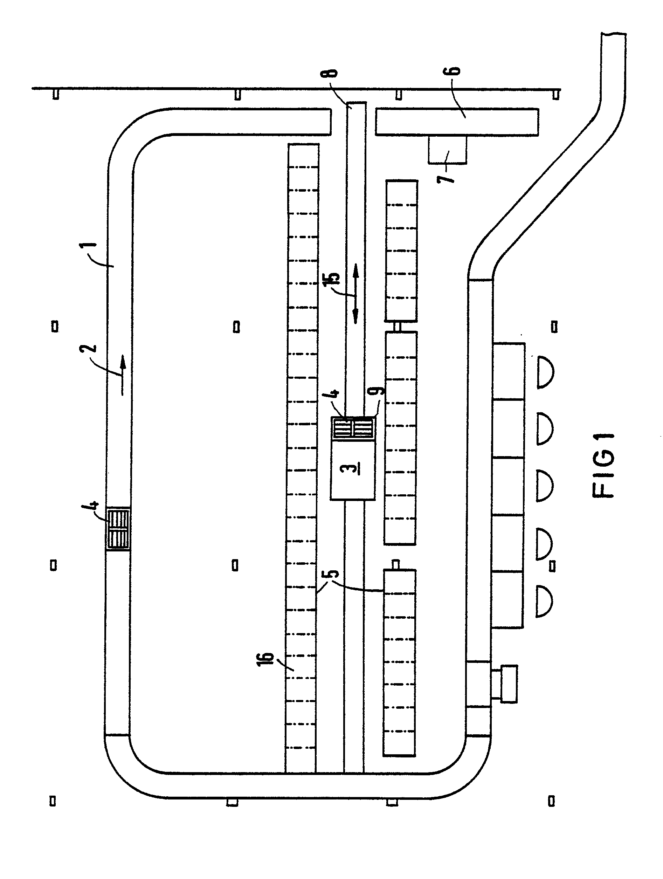

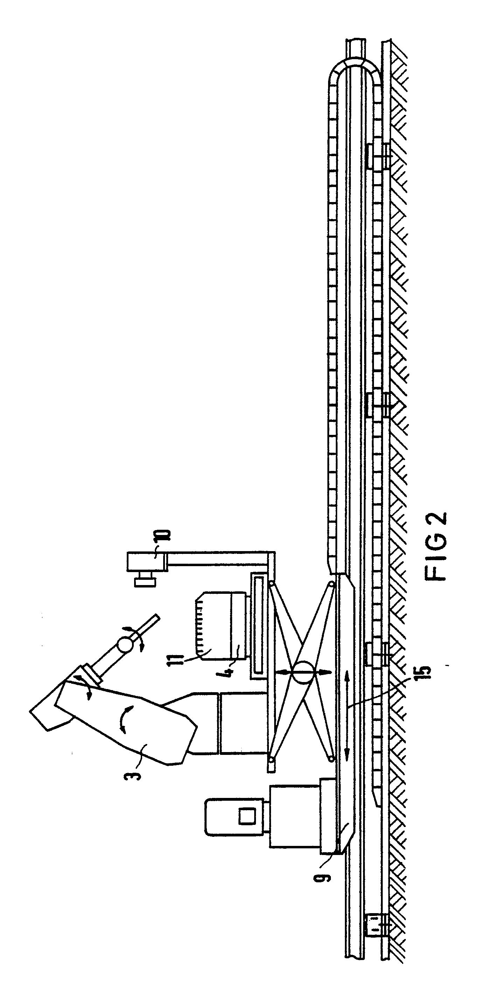

Wie aus Figur 1 ersichtlich, werden auf einem Anlieferband 1 in Richtung des Pfeiles 2 mit zu kommissionierenden Tüten gefüllte Kisten 4 angeliefert. An der Übergabestelle 8 werden diese Kisten 4 auf eine Linearverfahreinheit 9 (vgl. Figur 2) übernommen, auf der auch der Industrieroboter 3 mit Codelesereinrichtung 10 angeordnet ist. Ist eine gefüllte Kiste 4 auf der Verfahreinheit justiert befestigt, so wird der Greifer des Roboters 3 in der Kiste 4 positioniert und fährt die erste Tütenposition an, d. h. die erste Stelle an der eine Tüte 11 zu vermuten ist. Spricht ein Sensor für diese Tüte an, so wird diese Tüte schnell gegriffen und in das Gesichtsfeld des optischen Lesesystems 10 geführt, gelesen und die entsprechenden Daten an die stationäre Robotersteuerung 7 gegeben. Diese bildet hieraus die Zieladresse. Die Linearverfahreinheit 9 mit Roboter 3 fährt dann entsprechend dieser Zieladresse in Richtung des Doppelpfeiles 15 zu der vorgegebenen Adresse in den Regalreihen 5.

Parallel zum Anfahren der adressierten Position wird die gelesene Codierung an eine Datenverarbeitungsanlage 6 gegeben und von dieser ebenfalls zur Bildung der Zieladresse ausgewertet.

Ist die gelesene Codierung plausibel, wird die daraus ermittelte Zieladresse an die Robotersteuerung gemeldet. Nach Empfang der Adresse legt der Roboter die Tüte in das vorpositionierte Regalfach.

Ist die gelesene Codierung nicht plausibel, sendet die DVA die Adresse eines Fehlerfachs an die Robotersteuerung. Nach Empfang der Adresse verfährt die Lineareinheit zum Fehlerfach und der Roboter legt die Tüte im Fehlerfach ab.

Zur Wegpositionierung der Verfahreinheit und des Roboters entsprechend vorgegebener Wegbefehle können an sich bekannte Wegemeßsysteme und Steuerungen benutzt werden. Ist der Roboter mit dem gehaltenen Gut vor dem richtigen Ablagefach 16 angekommen, fährt der Greifer mit dem Gut in das Ablagefach, z. B. eine Kiste, ein. Spricht dabei ein Sensor an, so wird der Greifer um einen definierten Betrag versetzt erneut positioniert ; spricht dann in dieser Position der Sensor wieder an, so ist dies ein Indiz dafür, daß das betreffende Ablagefach gefüllt ist. Weitere Zuordnungen werden demzufolge von der Datenverarbeitungsanlage solange verhindert, bis die Räumung des betreffenden Faches gemeldet wird.

Wird jedoch die Abwurfposition für das vom Greifer gehaltene Gut erreicht, ohne daß dieser genannte Kraftsensor anspricht, so wird der Greifer des Roboters 3 geöffnet und die zu kommissionierende Tüte 11 abgelegt.

Solange noch Tüten in der Anlieferkiste 4 sind, wiederholt sich der vorstehend beschriebene Vorgang. Wenn die Anlieferkiste leer ist, fährt der Roboter 3 mit der Verfahreinrichtung 9 wieder in die Übergabestellung 8 und wechselt die geleerte Kiste 4 gegen eine neue gefüllte Kiste 4.

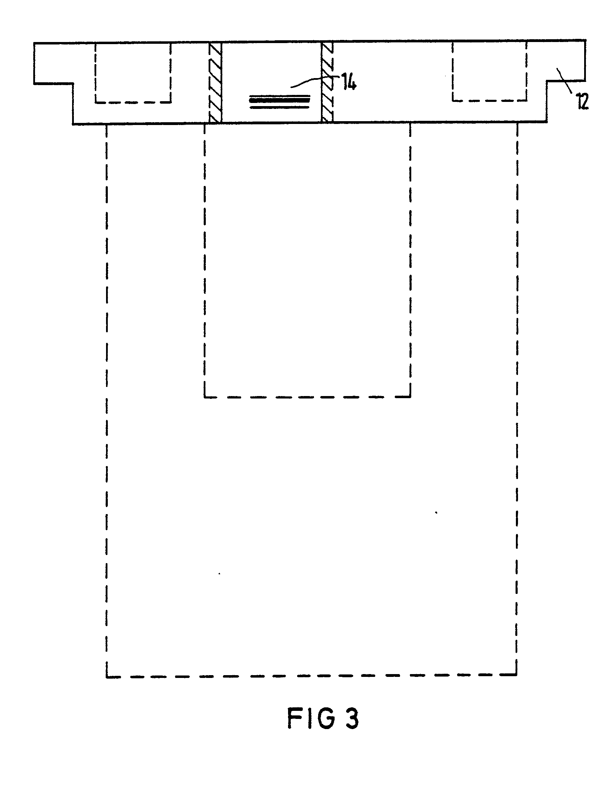

Die im vorliegenden Fall zu verteilenden Güter (vgl. Figur 3) bestehen aus Tüten, die z. B. mit Bauelementen gefüllt sind. Die Tüten sind mit Pappstreifen 12, die gleichzeitig als Hängeachsen für die Anlieferkisten 4 dienen, verschlossen. Zur Kennzeichnung der Tüten sind Sammelabrufstreifen 14 vorgesehen, die auf die Halteachsen aufgeklebt sind. Diese Sammelabrufstreifen enthalten u. a. einen maschinell lesbaren Identifizierungsbegriff, nach dem sich eine Tüte eindeutig einem Auftrag zuordnen läßt. Der Streifen 14 ist mit einem Positionsidentifizierungscode versehen, so daß die Kennzeichnung automatisch vom Lesesystem gelesen werden kann. Wie bereits bemerkt, werden diese Tüten mit den Halteachsen in vorbestimmten Abständen in die Anlieferkisten eingehängt.

## Patentansprüche

1. Verfahren zum Kommissionieren von Gütern, bei dem

a) eine Verfahreinheit mit Roboter (3) zum Greifen von Gütern und einem Codeleser (10) vorhanden ist,
b) die Güter mit einer maschinell lesbaren Codierung versehen sind und
c) zur Steuerung der Verteilung Codeleser und Rechner dienen,
gekennzeichnet durch folgende Merkmale :
d) auf der Verfahreinheit (9) wird eine Aufnahmevorrichtung (4) mit einer Vielzahl von Gütern (11) angeordnet,
e) auf einen Steuerbefehl hin greift der Roboter (3) jeweils eines der Güter (11) aus der beladenen Aufnahmevorrichtung (4) und schwenkt es mit seiner Codierung vor den Codeleser (10),
f) aus der gelesenen Codierung wird der Wegbefehl für die Verfahreinheit (9) und den Roboter (3) zum betreffenden Ablagefach abgeleitet,
g) simultan zur Ausführung des Wegebefehls wird die gelesene Codierung zum Rechner übertragen,
h) nach der Ausführung des Wegbefehls und nach Empfang der vom Rechner aufgrund der Plausibilisierung ermittelten Zieladresse legt der Roboter (3) das abgegriffene Gut (11) im betreffenden Fach ab,
i) dieser Steuerungsablauf ist jeweils solange wiederholbar, bis eine vorbestimmte Zahl von Gütern aus der Aufnahmevorrichtung (4) entnommen ist, worauf die Verfahreinheit (9) mit der Aufnahmevorrichtung (4) zu einer Beladestation (8) fährt.

2. Verfahren nach Anspruch 1, dadurch gekennzeichnet, daß Aufnahmevorrichtung, Ablagefächer und Güter mit Sensoren kontrolliert werden.

3. Verfahren nach Anspruch 1, dadurch gekennzeichnet, daß die Güter in Form von Tüten (11) in definierten Abständen voneinander in den Aufnahmevorrichtungen (4) aufgehängt werden.

4. Verfahren nach Anspruch 1, dadurch gekennzeichnet, daß die Aufnahmevorrichtungen (4) an der Beladestation (8) ausgetauscht werden.

## Claims

1. A method for warehousing goods, in which

a) a conveyor unit is provided with a robot (3) for unloading the goods and a code-reader (10),

b) the goods are provided with machine-readable coding and

c) a code-reader and a computer are used to control distribution, characterised in that

d) a container (4) with a number of goods (11) is arranged on the conveyor unit (9),

e) on a control command, the robot (3) grasps one of the articles (11) at a time from the loaded container (4) and swings it with its coding in front of the code-reader (10),

f) the command signal directing the conveyor unit (9) and the robot to the appropriate storage compartment is derived from the coding that has been read,

g) while the command signal is being obeyed, the coding which was read is simultaneously relayed to the computer,

h) after the execution of the command and after reception of the destination address checked by the computer for plausibility, the robot (3) sets down the article (11) in the appropriate compartment,

i) this control procedure is repeated until a predetermined number of goods has been taken from the container (4), whereupon the conveyor unit with the container moves to a loading station (8).

2. A method as claimed in Claim 1, characterised in that the pick-up attachment, storage compartments and goods are monitored by sensors.

3. A method as claimed in Claim 1, characterised in that the goods in the form of bags (11) are hung up in the containers (4) at defined distances from one another.

4. A method as claimed in Claim 1, characterised in that the containers (4) are exchanged at the loading-station (8).

**Revendications**

1. Procédé pour la préparation de marchandises en vue de leur expédition, selon lequel

a) il est prévu une unité mobile munie d'un robot (3) servant à saisir des marchandises, et un lecteur de codes (10),

b) les marchandises sont munies d'un codage pouvant être lu par une machine, et

c) un lecteur de codes et un ordinateur sont utilisés pour la répartition, caractérisé par les particularités suivantes :

d) on dispose un dispositif de réception (4) comportant une multiplicité de marchandises (11) sur l'unité mobile (9),

e) sous l'injonction d'une instruction de commande, le robot (3) saisit respectivement l'une des marchandises (11) sur le dispositif de réception (4) chargé et le fait basculer de manière à présenter son codage devant le lecteur de codes (10),

f) l'instruction de déplacement pour l'unité mobile (9) et pour le robot (3) en direction du casier de dépôt considéré est dérivée du codage lu,

g) le codage lu est transmis à l'ordinateur en même temps que l'instruction de déplacement est exécutée,

h) après l'exécution de l'instruction de déplacement et après réception de l'adresse de destination déterminée par l'ordinateur sur la base d'un contrôle de vraisemblance, le robot (3) dépose la marchandise saisie (11) dans le casier considéré,

i) ce cycle de commande peut être répété respectivement jusqu'à ce qu'un nombre prédéterminé de marchandises aient été retirées du dispositif de réception (4), à la suite de quoi l'unité mobile (9) munie du dispositif de réception (4) se déplace jusqu'à un poste de chargement (8).

2. Procédé suivant la revendication 1, caractérisé par le fait que le dispositif de réception, les casiers de dépôt et les marchandises sont contrôlés à l'aide de capteurs.

3. Procédé suivant la revendication 1, caractérisé par le fait que les marchandises en forme de sacs (11) sont suspendues, à des intervalles réciproques définis, dans les dispositifs de réception (4).

4. Procédé suivant la revendication 1, caractérisé par le fait que les dispositifs de réception (4) sont permutés dans le poste de chargement (8).

FIG 1

0 156 953

FIG 2

FIG 3

FIG 4